# EUROPEAN PATENT APPLICATION

(11) **EP 2 617 841 A1**
(43) Date of publication of application: **24.07.2013**
(21) Application number: 12151609.0
(22) Date of filing: 18.01.2012
(51) Int. Cl.: C22B 7/00

(54) **A method for recovering metal and/or metal compounds which are bound in polymer materials**

(71) Applicant: Paul Scherrer Institut, 5232 Villigen (CH)
(72) Inventor: Roth, Jörg, 79774 Albbruck (DE)
(74) Representative: Fischer, Michael

(57) **Abstract**

It is the objective of the present invention to provide a method for recovering metal and/or metal compounds which are bound in polymer materials, such as in the polymer materials of a PEM fuel cell, which can be processed at rather low cost and at volume scale.

This objective is achieved by a method for recovering metal and/or metal compounds which are bound in polymer materials, such as PTFE, Nafion®, gas diffusion layers, electrodes, polymer electrolyte membranes, comprising the steps of:
a) irradiating the polymer material with ionizing radiation, under determined conditions with respect to an irratiating profile which defines at least one of irradiation pattern, irradiation energy, irradiation intensity;
b) soaking of the irradiated polymer material in a liquid solving agent;
c) filtering the solid non-polymeric contents from the liquid solving agent; and
d) recuperating by appropriate chemical and/or physical processes the metal and/or metal compounds from the filtered non-polymeric solids.

The irradiation therefore yields to significant break of the strength of the polymer materials. This decomposition releases the metal and/or metal compounds from their strong embedding in the polymer The strong attachment between the polymer and the catalyst does not exist any longer or which exist only to a very limited extent after the irradiation step. By soaking and leaching the irradiated metal and/or metal compounds polymer specimen in a liquid solvent it is possible to free the metal and/or metal compounds from the polymer structure and recuperate the metal and/or metal compounds.

## Description

The invention relates to a method for recovering metal and/or metal compounds which are bound to polymer materials.

Together with an increasing demand on renewable energy generation, the generation of electrical power from fuel cells, such as polymer electrolyte membrane fuel cells (PEM fuel cell) is becoming major and more and more interesting for commercial applications. I.e. the automotive industry. Daimler-Benz AG is planning to launch the first PEM fuel cell operated cars in 2014 stemming from volume production. For the generation of an electrical power of about 30 kW for the propulsion, an active polymer membrane electrolyte area of about 30.000 cm² is required. Details on the design and the functioning of the PEM fuel cell are explained in "Handbook of Fuel Cells: Fundamental, Technology and Application; Vielstich, Lamm, Gasteiger; March 2003; ISBN: 978-0-471-49926-8.

In PEM fuel cells, the membrane and other parts, such as the gas diffusion layers, electrodes, consist or comprise fluoropolymers and modification thereof, such as radiation grafted polymers. In order to catalyse the electrochemical reaction by ionization of hydrogen at the anode side and oxygen at the cathode side (for an acidic electrolyte), a catalytic component, i.e. in form of a layer or a dispersed powder, is usually provided to the gas diffusion layer and/or to the polymer electrolyte membrane. Unfortunately, the best results for the catalysis are achieved when using precious metals, in particular platinum and/or ruthenium. With a typical precious metal loading of about 0.5 mg cm⁻² for the cathode and 0.2 mg cm⁻² for the anode per active area and an active area of 30.000 cm² (both anode and cathode side yield together 60.000 cm²) the amount of precious metal used totals at about 42 g which is costly and puts pressure on the global market for these metals.

During the assembly of a PEM fuel cell which is usually done by hot-pressing (for example according to WO 2005/031906 A1) the catalyst particle are fiercely embedded in the polymer materials.

Due to both the increasing market penetration of PEM fuel cells and the high prize of the catalysts used therein, a demand to recycle the catalyst material at the end of the fuel cell's life cycle is forseeable. Currently, promising methods to recover the metal content in such polymer materials do not exist for large scale application. State of the art is currently to combust the polymere and recover the metal content by metal deposition or by chemical precipitation in autoclaves (US 7 255 798).

It is therefore the objective of the present invention to provide a method for recovering metal and/or metal compounds which are bound in polymer materials, such as in the polymer materials of a PEM fuel cell, which can be processed at rather low cost and at volume scale.

This objective is achieved according to the present invention by a method for recovering metal and/or metal compounds which are bound to polymer materials, such as PTFE, gas diffusion layers, Nafion® or other polymer electrolyte membranes, comprising the steps of:
a) irradiating the polymer material with ionizing radiation, under determined conditions with respect to an irratiating profile which defines at least one of irradiation pattern, irradiation energy, irradiation intensity;
b) soaking of the irradiated polymer material in a liquid solving agent;
c) filtering the solid non-polymeric contents from the liquid solving agent; and
d) recuperating by appropriate chemical and/or physical processes the metal and/or metal compounds from the filtered non-polymeric solids.

The irradiation therefore yields to significant degradation of mechanical properties like the strength of the polymer materials (see J. Roth, J. Eller, and F. N. Büchi, ECS Transactions 41:371 (2011)) probably due to chain scission. This decomposition releases the metal and/or metal compounds from their strong embedding in the polymer structure. The strong attachment between the polymer and the catalyst does not exist any longer or which exist only to a very limited extent after the irradiation step. By soaking and leaching the irradiated metal and/or metal compounds polymer specimen in a liquid solvent it is possible to free the metal and/or metal compounds from the polymer structure and recuperate the metal and/or metal compounds.

The structure of the polymer material requires a certain amount of dose in order to destroy the long chain carbon bindings. Keeping in mind that the polymer materials of a PEM fuel cell for example are rather thin (sub-mm range), a preferred embodiment of the present invention provided for performing the irradiation over a period of 1 to 500 s. It is also possible to repeat the irradiation in order to deliver a number of irradiation cycles.

After the irradiation step(s), it is useful when the irradiated polymer material is soaked into a liquid solving agent comprising water and/or alcohol.

It has been proven that the ionizing radiation may be a polychromatic radiation of an X-ray source, preferably a standard X-ray tube. Alternatively, the ionizing radiation may be a synchrotron radiation or a particle radiation, such as an electron beam.

With respect to the fluoropolymers used in PEM fuel cell, it has been found suitable when the irradiation energy ranges from 0.5 to 50 keV, preferably in the range from 10 to 30 keV. Typically with these energies, a flux density of the ionizing radiation ranging from 10⁶ to 10¹⁵ photons s⁻¹ cm⁻² was found to be suitable to exhibit a sufficient release of the metal particles and/or metal compound particles used in PEM fuel cell's polymer materials.

Preferred embodiments of the present invention are hereinafter explained with reference to the attach drawings which depict in:
As one embodiment of the present invention is the exposure of a membrane-electrode assembly to monochromatic synchrotron x-ray radiation with an energy of 13.5 keV. A dose of 1.8 MGy was deposed on the MEA. Afterwards, the sample is soaked for 4 hrs at 80°C in deionised water. By this treatment, the noble metal containing catalyst layer separates completely from the membrane. In the next step, the polymer film and the particles of the catalyst layer are separated from the solvent by filtering and separately processed.
Figure 1 shows an irradiation effect on Nafion®212, measured by FTIR and fuel cell power output relative to the electric power before exposure; conditions: 13.5 keV, X-ray energy flux: 22 mJ s⁻¹ cm⁻², fuel cell current: 100 mA, 30° C.
Figure 2 shows an irradiation effect on strength of break and equivalent weight (related to the pristine values of strength and equivalent weight EW); conditions: 13.5 keV, X-ray energy flux: 22 mJ s⁻¹ cm⁻².
Figure 3 shows a contact angle hysteresis of water at room temperature on Toray 060 with different PTFE levels, 200 µm PTFE sheet and electrodes (on GDL); X-ray energy flux: 22 mJ s⁻² cm⁻².

In the present investigation a SR-XTM has been used that operates at energies between 10 keV and 30 keV (e.g. 13.5 keV is generally used for XTM at the site of the applicant). Here, the fuel cell performance loss, the mechanical and chemical properties of fuel cell components as a function of exposure time under irradiation conditions of XTM have been investigated. In order to draw reliable and sound conclusions from in-situ SR-XTM, the damaged components, the time scale of damage and the damage mechanisms has been identified and the experimental planning was adapted accordingly. In the experimental phase, 200 µm PTFE sheets (representative for the fluoropolymer used in membranes, GDL coatings and seals), Nafion®212 (DuPont), and catalyst coated membranes, catalyst coated backings, and gas diffusion layers were irradiated by synchrotron radiation at 13.5 keV. The samples were characterized afterwards for the strength of break (PTFE, membrane), the equivalent weight (EW) and FTIR analysis (membrane). Also, the contact angle hysteresis between water and the sample was probed with a Wilhelmy method (GDL, electrode and PTFE).

### Experimental

The materials under investigation are listed in Table 1. The irradiation was executed at the TOMCAT beam line of the Swiss Light Source (SLS), a third generation synchrotron facility at the Paul Scherrer Institut, Switzerland. The provided flux density of the source was in the order of 10¹³ photons s⁻¹ cm⁻² at a beam cross section geometry of 5 mm by 25 mm. The size of the samples was 24 mm by 4 mm. The error bars in the following plots represent one standard deviation based on a batch size of three measurements.

**TABLE I. Materials and Methods.**

| **Part** | **Material** | **Manufacturer** | **Method** |
|---|---|---|---|
| GDL | T060 10% PTFE | Toray inc. / BASF | Contact angle hysteresis |
| | T060 20% PTFE | | |
| Electrode | ELE0162 T060, 0.4 mg cm⁻² | Johnson Matthey | Contact angle hysteresis |
| | ELE0163 T060, 0.2 mg cm⁻² | | |
| Polymer | 200 µm PTFE | DuPont | Contact angle hysteresis, max. strength |
| Membrane | Nafion®212 | DuPont | Max. strength, FTIR, EW |
| | pMembrain™ H200 | Umicore | Max. strength, EW |

The fuel cell with an active area of 10 mm² was designed to meet the requirements of SR-XTM imaging experiments. The fuel cell assembly consisted of pMembrain™ H200 catalyst coated membrane (CCM) and corresponding pMembrain™ H200 GDL/MPL. During irradiation, the normal vector of the membrane was parallel to the X-ray beam and the complete active area was exposed to SR. In this configuration the cell is exposed to the maximum possible dose, which is accordingly less at other rotation angles. The fuel cell was operated remotely with a fully computerized test bench. The cell temperature was controlled by embedded temperature sensors (Pt-100) and small heating pads. Gas flows were regulated by mass flow controllers (Bronkhorst F-201C); the electrical parameters were set by an electric load (Chroma DC Load 63610-80-20) with accuracy better than 0.1 mA. The cell was operated with H2/02 in differential mode (stoichiometry > 10) with a dew point at room temperature (unheated bubbler) and atmospheric pressure at the outlet.

The infrared spectroscopic analysis was performed with a Perkin Elmer System 2000 FT-IR in absorbance mode with a triglycin sulfate detector (MIR). The spectral range was 400 cm⁻¹ to 4000 cm⁻¹. The instrument was controlled by the Spectrum 5.3 software. The spectra were averaged from 50 scans of each sample. Potassium exchanged Nafion®212 membranes were analyzed by FTIR in this way. For the details of sample preparation see the next paragraph on the EW.

The equivalent weight (EW: m [Polymer]/N[SO₃H]) of the irradiated membrane samples was determined as follows. The dry exposed membranes were soaked in deionized water at 80° C for 4 h. Then, the water was exchanged by 40 ml of 0.5 N KCl for replacing H⁺ by K⁺ (stirred for 48 h at room temperature). Afterwards, a titration was done with 0.05 N KOH with a Metrohm 702 SM Titrino. Finally, the membranes were dried at 80° C in vacuum and weighed. In order to have sufficient ion exchange capacity for quantitative analysis, three stripes 20 mm by 4 mm had been processed together. For statistical reasons each test was done three times, so 9 stripes per exposure time had been tested. The mass of the polymer was obtained in the K⁺ exchanged form and corrected for the molar mass of potassium.

The strength of break was measured with a Zwick and Roell Z005 testing machine, equipped with A.S.T KAF-TC 200 N force transducer. The sample stripes were mounted in customized clamps to meet the sample length of 24 mm. The PTFE samples, as well as the ion-exchanged membranes were tested with this method. The stability of the wetting properties of the fuel cell material is essential to draw relevant conclusions from the XTM experiment. The difference between advancing and receding contact angle (contact angle hysteresis) is a measure for the effort to transport water in surface tension dominated systems like the GDL. The hysteresis is measured by a dynamic Wilhelmy technique with a Kruess K100 instrument at Institute for Process Engineering, ETH Zurich. The samples had been submerged up to 12 mm into water and withdrawn at a velocity of 3 mm min⁻¹. The waiting period between immersion and emersion was 10 s. Each sample performed three cycles at room temperature. The surface tension of the test water was measured with a Wilhelmy plate before and after the tests to identify potential leach out from the samples. This was done on the PTFE foil, the GDL and the electrode samples. By immersion into the water, the metal particles and/or metal compound particles were to a large extent separated from the polymer material fragments.

### Results

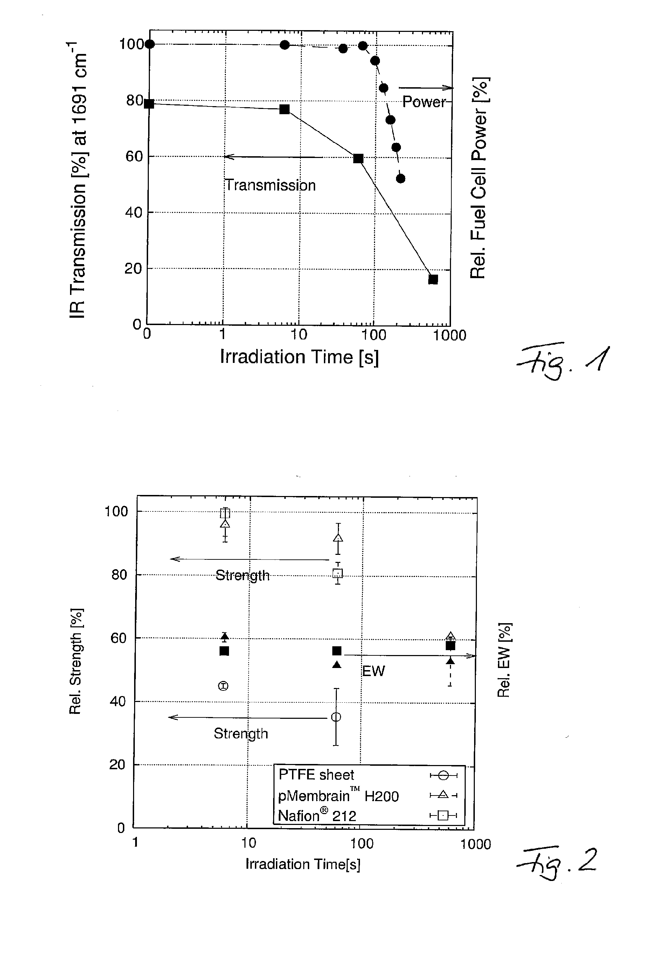

To quantify the impact of the X-ray illumination, the PEFC was operated at a constant current of 100 mA cm⁻². The irradiation sequence consisted of periods of 30 s X-ray exposure (with the exception of the initial exposure of 6 s), followed by stabilization periods lasting for several minutes in total, a dose of approx 0.5 J cm⁻² was applied. The plot in Figure 1 shows the average electric power relative to the power before exposure on the right axis, assigned to the end-time of the individual exposures. The left axis shows the development of an FTIR feature of potassium exchanged Nafion®212 membranes at 1691 cm⁻¹. This line at increasing degradation state of Nafion® (degraded by fuel cell operation) can be assigned to the new band of carboxylic acid groups. The effect of SR-irradiation on the strength of break on Nafion®212, pMembrain™ H200 and PTFE foil is significant. On the left axis of Figure 2 the relative change of the strength of break, on the right axis, the relative change of the EW as a function of SR irradiation is presented. Both parameters are related to the nonirradiated values. The PTFE experiences a radiation induced change readily at 6 s of exposure (absorbed energy: 14 mJ cm⁻²), the samples having experienced an exposure of 600 s (absorbed energy: 1.4 J cm⁻²) were not measured since they became so brittle that handling is challenging and mounting the samples is not possible. The strength of break of the membrane samples is less affected by the irradiation up to 6 s of exposure. Yet, between 6 s and 60 s (absorbed energy: 4 mJ cm⁻² - 38 mJ cm⁻²) those properties degrade also and at 600 s of exposure (absorbed energy: 0.38 J cm⁻²), the mechanical integrity is severely affected. Only one of the 18 membrane samples exposed for 600 s could be mounted and measured for this reason. All other polymer material were in a condition where the metal and the metal compounds could separated from the polymer material just by applying a liquid solvent, like a water-alcohol-mixture (50:50).

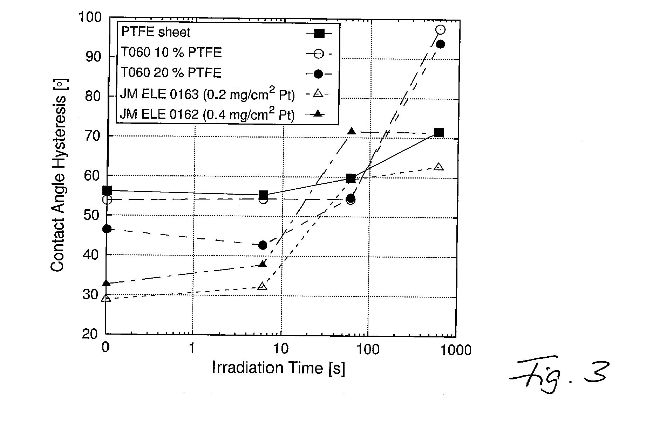

As previously indicated, the mechanical integrity of the membrane materials was degraded significantly at exposure times higher than 60 s and the formation of the intended material loss during the preparation for the EW determination is increasing. In addition to the mechanical disintegration, the pMembrain™ H200 material exhibited the intended losses of the catalyst layer (coloring of the water/alcohol mixture used for soaking) increasing with exposure time. This causes an increase of the experimental error for the EW measurement. The experiment revealed a decrease in equivalent weight, even at exposure times of 6 s and longer. This is a hint that an oxidation reaction on the ionomer takes place, which is in agreement with the observed effects on the mechanical stability. As expected from the change of the mechanical properties of PTFE, also the wettability is affected. The contact angle hysteresis of the electrodes, the GDL and the PTFE is increasing in the irradiation interval between 6 s and 60 s (absorbed energy: 0.14 J cm⁻², shown in Figure 3). In addition to this, it was found that the catalyst layer of the electrodes detached from the GDL substrates. It was found that this occurrence is independent from the loading of the electrodes or the amount of PTFE in the GDL.

### Conclusions

For exposure times higher than 60 s to 100 s (absorbed energy: 0.2 J cm⁻²) an irradiation dependent performance loss was found when cells are exposed to the beam as used for XTM imaging. Changes on similar time scales were found when irradiating PEFC materials ex-situ for the contact angle hysteresis (increase) of PTFE, GDL and electrodes, the feature evolution in FTIR spectra of the membranes, the degradation of the strength of break and the decrease of the EW. The decrease of the EW and the formation of IR active molecular groups point in the direction of the formation of carboxylic end groups as observed by fuel cell operation induced degradation. This would lead to a temporal decrease in ionic resistance of the ionomer in combination with crack or hole formation due to material loss. The increase of water transport resistance in the GDL (measured by the contact angle hysteresis) can lead to XTM induced increase in local saturations, the loss of mechanical strength of polymers to a failure of the gasket. All these effects result in a degradation of the polymer materials as known from durability testing, yet the time constants seen in this study are much faster than one would expect for the individual failure modes. It is likely that the observed delamination of the catalyst layer from the electrodes and the membrane (deliberately induced by the decomposition of the binding ionomer in the catalyst layer) results in a decreased utilization of the catalyst layer which could explain the fast degradation. It may be concluded that state of the art SR-XTM based imaging of running cells strongly interferes with the fuel cell operation.

## Claims

1. A method for recovering metal and/or metal compounds which are bound in polymer materials, such as PTFE, Nafion®, gas diffusion layers, electrodes, polymer electrolyte membranes, comprising the steps of:
a) irradiating the polymer material with ionizing radiation, under determined conditions with respect to an irratiating profile which defines at least one of irradiation pattern, irradiation energy, irradiation intensity;
b) soaking of the irradiated polymer material in a liquid solving agent;
c) filtering the solid contents from the liquid solving agent; and
d) recuperating by appropriate chemical and/or physical processes the metal and/or metal compounds from the filtered solids.

2. The method according to claim 1, wherein the irradiation is performed over a period of 1 to 3600 s.

3. The method according to claim 1 or 2, wherein the irradiation is performed repeatedly.

4. The method according to any of the preceding claims, wherein the irradiated polymer material is soaked into a liquid solving agent comprising water and/or alcohol.

5. The method according to any of the preceding claims, wherein the ionizing radiation is a polychromatic radiation of an X-ray source.

6. The method according to any of the preceding claims 1 to 4, wherein the ionizing radiation is a synchrotron radiation.

7. The method according to any of the preceding claims 1 to 4, wherein the ionizing radiation is a particle radiation, such as an electron.

8. The method according to any of the preceding claims 1 to 7, wherein the irradiation energy ranges from 0.5 to 50 keV, preferably in the range from 10 to 30 keV.

9. The method according to any of the preceding claims, wherein a flux density of the ionizing radiation ranges from 10⁶ to 10¹⁵ photons s⁻¹ cm⁻² at a beam cross section geometry in the range from 20 mm² to 500 mm².
